Europäisches Patentamt

European Patent Office

Office européen des brevets

(11) Publication number: **0 445 695 A2**

# EUROPEAN PATENT APPLICATION

(21) Application number: **91103217.5**

(22) Date of filing: **04.03.91**

(51) Int. Cl.⁵: **B65G 65/00, B65G 49/08, B28B 13/04**

(30) Priority: **06.03.90 IT 4003990**
    **14.12.90 IT 4016890**

(43) Date of publication of application:
    **11.09.91 Bulletin 91/37**

(84) Designated Contracting States:
    **DE ES**

(71) Applicant: **GRUPPO BERBIERI & TAROZZI S.r.l.**
    **Via Prampolini, 16**
    **I-41043 Formigine(IT)**

(72) Inventor: **Barbieri, Emer**
    **Via Risorgimento 8**
    **I-41043 Formigine (Modena)(IT)**
    Inventor: **Tarozzi, Fausto**
    **Viale dello Sport 21**
    **I-41043 Formigine (Modena)(IT)**

(74) Representative: **Modiano, Guido et al**
    **MODIANO, JOSIF, PISANTY & STAUB**
    **Modiano & Associati Via Meravigli, 16**
    **I-20123 Milano(IT)**

(54) **Unit for the multi-layer storage and sorting of tiles, in particular of so-called special ceramic tiles, such as small glazed floor tiles, mosaic tesserae and the like.**

(57) The unit for the multi-layer storage and sorting of tiles, in particular of so-called special ceramic tiles, such as small glazed tiles, mosaic tesserae and the like, comprises at least one container frame composed of a plurality of stackable modular subframes (3), each supporting a plurality of free rollers (5). A machine (6) provides the simultaneous rotation of rollers (5), by means of at least one arm (7) which can be moved vertically and horizontally on a framework (8) and which is provided with gripping and transmitting means (8b) which engage the rollers (5) upon horizontal movement of the arms (7). The machine (6) further has a slideway (9) which is vertically movable with the arms (7) and which is provided with motorized rollers (10). Driving connection elements (8c) allow driving connection between rollers (10) and rollers (5).

FIG. 1

The present invention relates to a unit for the multi-layer storage and sorting of tiles, in particular of so-called special ceramic tiles, such as small glazed floor tiles, mosaic tesserae and the like.

In the ceramics industry, and in particular in the industry for the manufacture of special tiles, such as for example those which are hand- or machine-decorated after a preliminary glazing, those known as small glazed floor tiles, or those very small ones such as tesserae for making mosaics, there exists the problem of the automatic conveyance of batches of said tiles from or to a processing station, and from said station, for example, to a baking kiln.

Machines which are provided with one or more horizontally and vertically movable arms and which can remove, at each intervention, by means of a related mechanical clamp articulated to said arms, a plurality of tiles arranged in rows and columns on loaded stacked structures in order to deposit them on similar unloaded structures, both of which are generally arranged in the immediate neighborhood of the machine, are currently used on ordinary conveyance lines.

Each of said structures consists of a plurality of small quadrangular frames which, in order to be loaded and unloaded, must be snugly locatable between rollers which constitute the conveyance planes of said ordinary conveyance lines and which uninterruptedly extend up to the machine.

Essentially, said small frames have parallel cross-members arranged with a constant pitch so that they can insert snugly in the interspaces defined between the rollers to first disappear at a level which is slightly lower than the plane constituted by said rollers, so as to allow the forming of the rows and columns of tiles on said rollers, and then rise, removing them, and so that they can be stacked together with the frames to constitute said structures.

This known method of operating is very onerous and requires machines which have a complex structure and which are placed in an operating area which is significantly large, and which furthermore requires a large number of frames in order to minimize downtimes.

The distance between the cross-members is furthermore univocally fixed and is determined by the pitch of the rollers which constitute ordinary conveyance lines; therefore small mosaic tesserae, for example, or small floor tiles, cannot be conveyed with this automatic system, since due to their small dimensions they do not rest on at least two contiguous cross-members; their handling must therefore necessarily occur either manually, with a great expenditure of time and effort, or with systems which are specifically provided for this purpose and are therefore very expensive.

Finally, if it is necessary to operate on tiles arranged on a frame which is inserted in an intermediate region of the structure, it is indispensable to remove all the frames arranged above the involved one in order to gain access thereto.

The technical aim of the present invention is to obviate the above described disadvantages by providing a unit for the multi-layer storage and sorting of tiles, in particular of so-called special ceramic tiles, such as small glazed floor tiles, mosaic tesserae and the like, which can handle tiles made of any size, even a minimal one, and located at any level of the global structure, without having to remove all the frames which constitute the upper portion of the structure, and which furthermore does not require complex machines, which is modular, and which has substantially modest manufacturing and management costs.

A further object of the present invention is to provide a unit for the multi-layer storage and sorting of tiles, which has a handling system which is simple in concept and which has a very economical structure.

This aim, this object and others are achieved by a unit for the multi-layer storage and sorting of tiles, in particular of so-called special ceramic tiles, such as small glazed floor tiles, mosaic tesserae and the like, as defined in the appended claims.

Further characteristics and advantages of the invention will become apparent from the description of a preferred but not exclusive embodiment of a unit for the multi-layer storage and sorting of tiles, illustrated only by way of non-limitative example in the accompanying drawings, wherein:

figure 1 is a schematic perspective view of the unit according to the present invention in unloaded configuration, associated with a movement machine;

figure 2 is an enlarged-scale view of a detail of the preferred embodiment of a container frame of the unit shown in figure 1;

figures 3 and 4 are plan views of the unit shown in figure 1, respectively in an idle configuration and in an active configuration;

figure 5 is a schematic view of the sectional placement of a roller of a slideway in the configurations of figure 4 and figure 3 respectively;

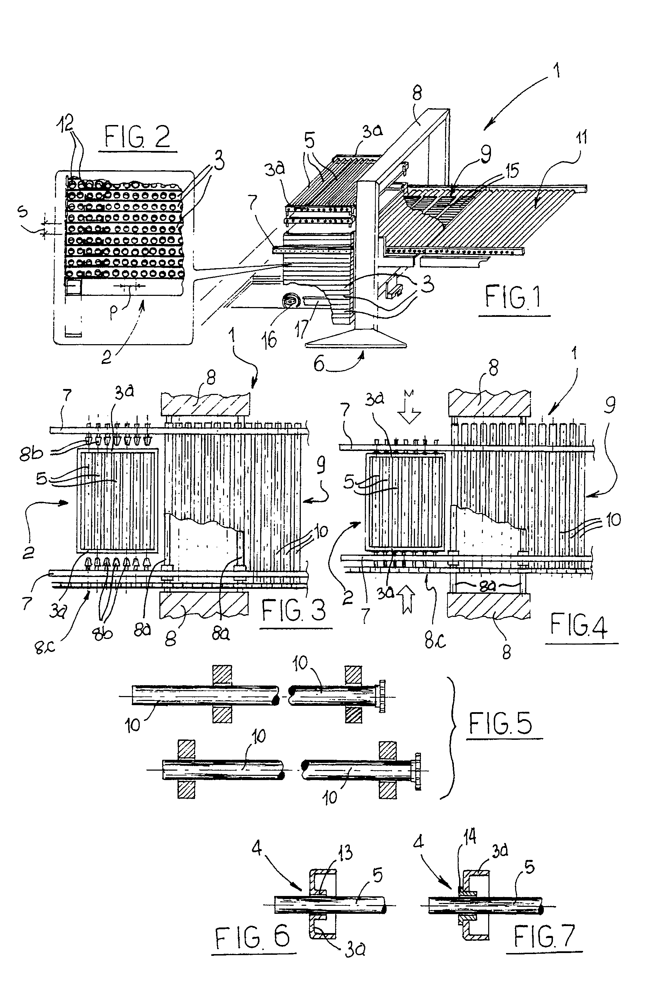

finally, figures 6 and 7 are detail views of two possible embodiments for support means for supporting the ends of the rollers of a subframe, respectively by drawing for light rollers or with an antifriction bush for heavy rollers.

With particular reference to the above figures, the reference numeral 1 generally indicates a unit for the multi-layer storage and sorting of tiles, in particular of so-called special ceramic tiles, such as small glazed floor tiles, mosaic tesserae and the like, which comprises a container frame 2 which is composed of a plurality of stackable modular sub-frames 3, each of which supports, between two sides 3a, by virtue of related support means 4, a plurality of free rollers 5 which are mutually parallel and can be arranged with a pitch P which can vary according to the dimensions of the tiles to be supported.

The rollers 5 of each sub-frame 3 can be rotated simultaneously with respect to one another with a related machine 6 which is provided, in the preferred embodiment, with two arms 7 which are substantially horizontal, and which can be moved vertically on a related generally portal-shaped framework 8 and horizontally on related transverse guides 8a which are supported thereby; said arms 7 are provided, on the faces directed toward the container frame 2, with means for gripping and rotating the rollers 5 which consist of rows of conical points 8b which can rotate about horizontal and parallel axes and which have mutually opposite tapers directed toward the frame 2; at least one row of said points, supported by an arm 7, is provided, on the end directed outward, with driving connection elements 8c which can be drivingly connected to the corresponding ends of rollers which constitute a slideway 9 described hereinafter, whereas the opposite row is freely rotatable.

The machine 6 is furthermore provided, on the opposite side with respect to the arms 7, with said slideway 9, which also has a resting plane constituted by motorizable rollers 10 and which can be moved vertically parallel to itself on the frame 8 together with the arms 7; said slideway 9 is for connection between a conventional conveyance line 11 and each of said sub-frames 3.

The support means 4 of said sub-frames which support the rollers 5 are constituted, in the preferred embodiment, for each of the roller ends, by a respective slot 12 provided in the sub-frame sides which has a normally circular shape with a larger diameter than that of said rollers 5; however, further embodiments are provided for the use of lightweight rollers, in which case the ends of said rollers are supported by drawn portions 13 which are defined directly in the sides 3a of the sub-frames 3, whereas, for rollers made of heavy material such as for example steel, the insertion of an antifriction bush 14 in related seats predefined in the sides 3a is provided for.

The operation of the invention can be easily desumed from the above description: in the case of the "loading" of the container frame 2, preformed rows of tiles 15 arrive at the conveyance line 11 and are transferred onto the slideway 9, which after the completion of the loading on its own available useful surface, moves vertically on the framework 8 until it arranges itself co-planar to the sub-frame 3 which is intended to receive the rows of tiles 15.

Simultaneously, since in practice they constitute the monolithic extension of the sides of said slideway 9, the arms 7 in spaced configuration also move vertically until they align themselves with the sides 3a of said sub-frame 3; said arms 7 then converge toward the sides thereof, and the means for gripping and moving the rollers 5 start to operate together with those for moving the rollers 10 to which they are connected; in practice, the mutual approach of the arms 7 causes the insertion of the conical points 8b in the open ends of the rollers 5 of the sub-frame 3, then the lifting thereof from their rest in their seats and the coupling by adhesion with said points, with transmission of the rotary motion; simultaneously, the rollers of the slideway 9 also start to rotate and in this manner the ordered rows of tiles 15 are moved in block onto the sub-frame 3 in which the pitch P has been preset according to the dimensions of said tiles 15 to be conveyed.

Each container frame 2 is generally composed of a stack of sub-frames 3 which have mutually identical pitches P; it is furthermore possible, if required, to stack sub-frames 3 having a different thickness S in order to receive on various levels tiles 15 which have mutually different dimensions.

Finally, each container frame 2 can be provided, in a downward position, with translatory wheels 16, which in the example illustrated in figure 1 run along rails 17 inserted in hollow seats defined in the flooring.

The described step of loading tiles 15 can, by reversing the order of operation, be converted into a step of unloading and removal onto the conveyance line 11.

The fact is stressed that the invention allows to remove or insert tiles 15 on any one of the sub-frames 3 arranged at intermediate levels of the frame of the container 2 without having to first remove the portion thereof which is arranged above; it is furthermore pointed out that said removal and/or insertion can be performed with a single gearmotor unit, with a consequent constructive economy.

Advantageously, said arms which can be moved horizontally and vertically are two, are horizontal and parallel and can also be moved horizontally on related guides from a position which is spaced from the container frame for non-intervention to a position which is closed onto said frame for gripping and moving the rollers of a modular sub-frame.

For convenience in description, those known components which fully automate the various operations of the invention are not illustrated in the drawings.

Finally, it is pointed out that each of the sub-frames 3 can be removed, if required, even manually from the container frame 2 to be sent to particular processing steps.

In practice it has been observed that the invention thus described achieves the intended aim and object.

The invention thus conceived is susceptible to modifications and variations, all of which are within the scope of the inventive concept; furthermore, all the details may be replaced with other technically equivalent elements.

In practice, the materials employed, as well as the dimensions, may be any according to the requirements, without thereby abandoning the scope of the protection of the following claims.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

**Claims**

1. Unit for the multi-layer storage and sorting of tiles, in particular of so-called special ceramic tiles, such as small glazed floor tiles, mosaic tesserae and the like, characterized in that it comprises at least one container frame (2) which is composed of a plurality of stackable modular sub-frames (3), each sub-frame supporting, between two sides (3a), with related support means (4), a plurality of free and parallel rollers (5) which can be arranged with a pitch which can vary according to the dimensions of the tiles, a machine (6) for the simultaneous rotation of the rollers (5) of each stacked sub-frame (3), provided with at least one related arm (7) which can be moved vertically and horizontally and is provided with means (8b) for gripping and transmitting rotary motion to the rollers, and, on the opposite side with respect to the arm (7) or arms, with a slideway (9) which can also be moved vertically, for connection to a line (11) for the arrival/removal of the tiles, the loading/unloading conveyance of the tiles onto/from each sub-frame (3) being executable without disassembling the container frame (2).

2. Unit according to claim 1, characterized in that it comprises said two vertically and horizontally movable arms (7), which are horizontal and mutually parallel, said arms (7) being movable horizontally on related guides (8a) from a position which is spaced from the container frame (2) for non-intervention to a position which is closed thereon for gripping and moving the rollers (5) of a modular sub-frame (3).

3. Unit according to claim 1 or 2, characterized in that said roller supporting means (4) are constituted, for each side (3a), by a vertical slot (12) for the loose resting of the corresponding end of the roller (5).

4. Unit according to claim 1 or 2, characterized in that said roller supporting means (4) are constituted, for each side (3a), by a drawn portion (13) for the slightly loose resting of the corresponding end of the roller (5).

5. Unit according to claim 1 or 2, characterized in that said roller supporting means (4) are constituted, for each side (3a), by an antifriction bush (14) for the snug resting of the corresponding end of the roller (5).

6. Unit according to claim 1, characterized in that the available useful surface of said connecting slideway (9) is substantially equal to the available useful surface of each sub-frame (3) for the transfer thereon and therefrom of modular quantities composed of tiles (15) ordered in rows and columns.

7. Unit according to claim 1, characterized in that said vertically movable slideway (9) is constituted by a substantially quadrangular planar frame the sides whereof are constituted by the extension of said arms (7) and support the ends of a plurality of further horizontal and mutually parallel rollers (10) which can be motorized on corresponding ends in synchronous rotation with the rotary motion of said means (8b) for gripping and transmitting motion to the rollers of a modular sub-frame.

8. Unit according to claims 1, 2 and 7, characterized in that said grip and transmission means consist of rows of conical points (8b), which can be rotationally actuated and have opposite tapers directed toward the ends of the rollers (5) of the sub-frames (3), and which are protrudingly supported in a parallel manner by said arms (7), the opposite ends of a row which are directed outward protruding with respect to said arms and being provided with elements (8c) for connection to the corresponding ends of the rollers (10) of said slideway (9).

9. Unit according to claim 8, characterized in that the opposite ends of the rollers (10) of said slideway (9) provided with the elements (8c) for connection to the corresponding ends of the conical points (8b) can slide axially in a transverse direction and snugly in seats defined in the corresponding side of the frame of the slideway (9).

10. Unit according to claims 8 and 9, characterized in that said elements (8c) for the connection of the corresponding ends of the rollers (10) and of a row of conical points (8b) are constituted by respective gearwheels which are keyed on the rotation axes of the rollers (10) and of the points (8b), said gearwheels being mutually aligned and engaging the links of a chain which is closed in a loop and is motorized by a related gearmotor unit.

11. Unit according to claim 1, characterized in that said arms (7) and said slideway (9) are vertically movable and are in step in a co-planar manner.

FIG. 2

FIG.1

FIG. 3

FIG.4

FIG.5

FIG. 6

FIG.7